(19) Europäisches Patentamt
European Patent Office
Office européen des brevets

(11) Publication number: **0 094 767**
**A1**

(12) **EUROPEAN PATENT APPLICATION**

(21) Application number: 83302537.2

(22) Date of filing: 05.05.83

(51) Int. Cl.³: H 02 P 13/18
H 02 P 7/62

(30) Priority: 07.05.82 US 375796

(43) Date of publication of application: 23.11.83 Bulletin 83/47

(84) Designated Contracting States: DE FR GB IT

(71) Applicant: THE BABCOCK & WILCOX COMPANY
1010 Common Street P.O. Box 60035
New Orleans Louisiana 70160(US)

(72) Inventor: Robertson, John W., Jr.
30951 Lakeshore Boulevard
Willowick Ohio(US)

(72) Inventor: Siegel, Stuart B.
1201 Lost Nation
Willoughby Ohio 44094(US)

(74) Representative: Cotter, Ivan John et al,
D. YOUNG & CO. 10 Staple Inn
London WC1V 7RD(GB)

(54) **Devices for generating three-phase PWM waveforms for control of induction motors.**

(57) Programmed digital equipment is utilized in a device (10) to generate three-phase pulse width modulated (PWM) waveforms that are used in controlling an induction motor. A microprocessor (12) is programmed to initialize conditions in the system (10), to perform a main task including the storage of a converted analog signal, the checking of limits of motor motion and information fed back from the motor concerning its position, and the ramping of frequencies to change the position of the motor. A memory is provided for the programming, which memory also contains tables that correspond to 90° of each desired waveform. A simple 90° segment of each waveform is needed to generate all parts of each of the three phases. An analog to digital converter (44) is utilized to convert analog information concerning gain, set point, deadband and feedback signal into digital signals which are stored and processed by the microprocessor (12). Programmable timers (16, 18) are connected to the microprocessor (12) for generating the waveforms and for supplying master timing and interrupt signals indicative of an undesirable condition in the motor control.

EP 0 094 767 A1

./...

FIG. I

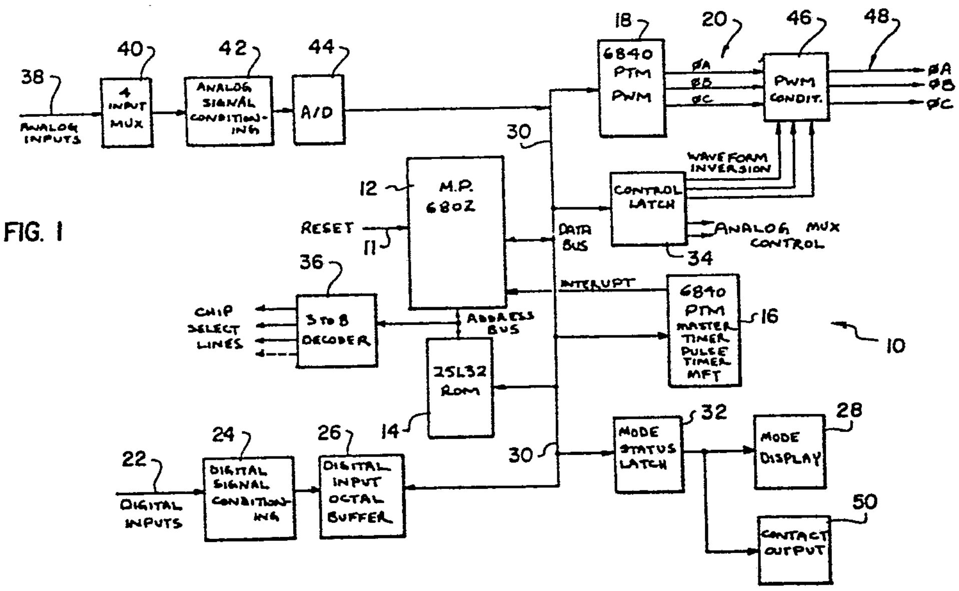

38
ANALOG INPUTS
40
4 INPUT MUX
42
ANALOG SIGNAL CONDITION-ING
44
A/D
18
6840 PTM PWM
20
ØA
ØB
ØC
46
PWM CONDIT.
48
ØA
ØB
ØC
30
WAVEFORM INVERSION
12
M.P. 6802
RESET
11
DATA BUS
CONTROL LATCH
ANALOG MUX CONTROL
34
36
CHIP SELECT LINES
3 to 8 DECODER
ADDRESS BUS
INTERUPT
6840 PTM MASTER TIMER PULSE TIMER MFT
16
10
25L32 ROM
14
32
28
MODE STATUS LATCH
MODE DISPLAY
22
DIGITAL INPUTS
24
DIGITAL SIGNAL CONDITION-ING
26
DIGITAL INPUT OCTAL BUFFER
30
50
CONTACT OUTPUT

# DEVICES FOR GENERATING THREE-PHASE PWM WAVEFORMS FOR CONTROL OF INDUCTION MOTORS

This invention relates to devices or apparatus for generating digital three-phase pulse width modulated (PWM) waveforms which can be used for constant torque variable speed control of induction motors, for example for closed loop position control.

Previous methods utilize analog cicuitry comprising sinusoidal and triangular waveform generators to produce the pulse width modulated waveforms necessary to control a three-phase induction motor for constant torque variable speed control. The analog technique is usually complex, requiring numerous factory and field adjustments. Also, the analog system is difficult to reconfigure to different applications after final design.

Limited use of digital techniques (including microprocessors) have been attempted for open loop induction motor speed control.

US Patent No. 4 099 109 to Abbondanti discloses a digital apparatus for synthesizing pulse width modulated waveforms. According to that reference, however, the waveforms are selected by hardware. The versatility of Abbondanti for adapting the induction motor control to various applications is thus limited. In addition, the provision of the logic required for induction motor control using hardware limits the flexibility of such control and the adaptability thereof to various different conditions and requirements.

The use of three-phase AC induction motors to replace DC motors for various control functions, such as the movement of butterfly valves and the like, has become increasingly popular with the introduction of controllers which can vary the three-phase waveforms applied to the induction motors. This is due to the reduced size and complexity of AC induction motors, particularly in the range of ratings below 7.5 kW (10 HP).

According to the present invention there is provided a device for generating three-phase pulse width modulated waveforms for constant torque variable speed control of an induction motor, the device being characterised by:

a microprocessor which is programmed for initialization, a main task, interrupt processing, and waveform generation, the main task comprising storing a converted analog signal, checking limits of motor position and, when such limits are reached, setting a desired frequency of the motor to zero, checking a feedback signal which is indicative of the motor position, ramping frequency to meet the desired motor frequency, and selection of mode of control according to at least one algorithm;

a memory connected to the microprocessor for containing the programming thereof and for containing a plurality of tables each corresponding to a desired motor waveform;

an analog to digital converter connected to the microprocessor for receiving a gain control signal, a deadband control signal, a set point control signal and a feedback control signal, the converter being operable to convert at least one of said control signals at a time into said converted analog signal;

three waveform timers connected to the microprocessor for receiving information from one of said tables in the memory to generate three-phase pulse modulated waveforms for the motor; and

at least one additional timer connected to the microprocessor for generating, upon the occurrence of an undesirable condition for the motor, an interrupt signal to be applied to the microprocessor.

Additional information which is useful in understanding the present application can be found in our co-pending European Patent Application No. 83302076.1 (Publication No. EP 0092937 ), which is to be deemed incorporated herein by this reference.

In a preferred device embodying the present invention and described in detail hereinbelow, real time software is utilized in the microprocessor to control the pulse width modulated waveform (PWM) shape and also to control logic involving interrupt and control signals. The use of real time software increases the flexibility of the system to adapt to different conditions and applications. Digital techniques are used in the preferred device to generate the PWM waveforms. The close interrelationship between the hardware (microprocessor and related peripherals) and the real time software allow efficient generation and control of the PWM waveforms for both open loop and closed loop systems. The preferred device is such as to allow the easy alteration of the control techniques and PWM generation for closed or open loop control with no hardware redesign involved. Necessary changes required for different applications can be implemented in the real time software, the microprocessor being programmable so as to adapt to different control requirements and conditions. No factory calibration is required after the real-time software is configured for the intended application. The preferred device alleviates or overcomes the drawbacks of an analog modulation device and generates waveforms for any assigned output level.

The invention will now be further described, by way of illustrative and non-limiting example, with reference to the accompanying drawings, in which:

Figure 1 is a block diagram of a position control module comprising a device embodying the invention for generating three-phase pulse width modulated waveforms;

Figure 2 is a flow chart showing initializing and main tasks of the programming of a microprocessor of the device of Figure 1;

Figure 3 is a flow chart of wave pulse and overcurrent processing tasks of the microprocessor programming;

Figure 4 is a block diagram illustrating analog and digital interfaces to the microprocessor;

Figure 5 is a diagram showing the three-phase pulse modulated waveforms; and

Figure 6 is a schematic representation of the position control module or device in a three-phase drive controller for an induction motor.

The drawings show a device embodying the invention for generating three-phase pulse width modulated (PWM) waveforms allowing variable speed control of an induction motor.

The waveform generation is implemented by hardware and real time software, which is completely contained on a circuit card designated as a position control module (PCM) 10 in Figure 1. The PCM 10 is an integral part of another system designated a three phase drive controller and shown in Figure 6. The three phase drive controller controls the motion of a motor to set the position of dampers, air registers, butterfly valves, or other process control elements which require a motor or servo positioner to control their position from a remote location.

The PCM 10 provides intelligence for the three phase drive controller. The PCM 10 is a self-contained microcomputer which accepts control system inputs and, based on those inputs, develops logic level PWM waveforms which are applied to three power switching modules which are external to the PCM.

The PCM uses a MC6802 microprocessor 12 with up to 4K bytes of program storage. The processor 12 is an interrupt driven machine with priority given to updating the real time three phase (3Ø) PWM waveform outputs to the induction motor. The remaining processor time is used to check control system inputs, perform calculations, and display controller status.

A functional diagram of the hardware of the PCM 10 is shown in Figure 1. A schematic of the PCM is shown in Figure 6, in the three-phase drive controller.

A microprocessor based system for three phase motor control is more versatile than a dedicated analog or digital logic design. The ease of software modification allows the functional performance of the controller to be easily changed to a new application.

The microprocessor 12 used in the PCM as a central control unit is a Motorola 6802. The 6802 processor 12 includes 128 bytes of RAM and an onboard system clock.

The control software requires approximately 3K bytes of memory. The software is stored in a 4K ultra violet erasable read only memory (ROM) 14 such as a 25L32 or 27L32 device. These devices have access times of 450 nsec, which is sufficient for this application. The ROM addresses are located at the top of the memory from $F000 to $FFFF.

The control program uses only the 128 bytes of RAM located on the 6802 microprocessor 12. The RAM is used for buffers and variable storage. The RAM address locations are from $0000 to $007F.

The design includes two Motorola 6840 programmable timer modules (PTM) 16 and 18. Three individual timers are located on one LSI device. The timers are used to generate output waveform pulse patterns at 20, measure time variant digital inputs, generate interrupts, and provide a machine fault time (MFT) function.

The timers (16, 18) are operated in a single shot mode. This mode allows a 16 bit binary number to be loaded into a timer latch. Count down is initiated through software or external logic control. A complete countdown to 0 of the 16 bit binary number generates an interrupt, or changes the state of the output associated with that timer. The rate at which count down occurs is determined by the system clock or an external clock source.

Four timers (in 18) are dedicated to the generation of the three pulse width modulated waveforms 20. One timer is a master timer (in 16) which generates processor interrupts at a rate proportional to the output frequency of the controller. The interrupt routine updates the other three timers, each dedicated to a phase output, with the new PWM waveform values.

The processor timer not associated with the interrupt routine is used to complete the main task of the control software to be described later. The use of the timers minimizes the processor overhead associated with the generation of the PWM waveforms.

The digital system inputs 22 are all TTL logic level. The incoming digital inputs are all filtered at 24 to eliminate noise generated by high power inverter circuitry. In addition, transient protection is provided to suppress electrical surges. The inputs are buffered and interfaced to the processor by an octal buffer 26.

Digital signals which are outputted by the processor 12 for control of the PWM waveform 20, mode status at latch 32, and analog multiplexing, interface to their associated circuitry by octal latches. The octal latches are a low cost method of digital interface for a given dedicated application. The latch 32 dedicated to controller mode display 28 is configured to allow data bus information from line 30 to be displayed under program control. This feature is beneficial for both testing and analog calibrations at 28.

Latches, buffers, programmable timers, memory, and the analog to digital converter are all memory mapped by a 3 to 8 digital decoder 36. The decoder segments the memory into 8 addressable zones. All necessary logic has been included to ensure the proper timing of data, address, and chip select lines.

A machine fault timer (MFT) in 16 has been provided on the PCM 10 to reset the processor 12 in the event a noise pulse or bad address disturbs the normal software execution. The MFT is updated by the processor during a regular known program sequence. The absence of this update implies a software failure. The MFT times out and rests the processor, reinitializing the system as will be described later.

Four analog signals at line 38 are recognized by the PCM 10. Two represent the gain and deadband control parameters which are generated internally by potentiometers. These parameters are associated with closed loop position control. They can easily be redefined in software for other applications. The remaining two are the setpoint and the feedback analog inputs which originate from a control system (Fig. 6). Each analog signal has the voltage range of 0.75 to 5.25V dc. The feedback and setpoint signals, in addition, can be 4-20 mA signals which are converted to voltages by the PCM. The advantage of a current input signal is reduced noise and no attenuation due to long signal wires. The feedback signal is buffered and outputed to the control system for other control applications.

The four analog voltages are selected individually for A/D (analog to digital) conversion by an analog multiplexer 40 under processor control. The selected analog voltage is applied to a level shifter and filter 42 for proper signal conditioning before the 8 bit A/D conversion 44. The A/D converter 44 has an adjustable zero and span allowing maximum resolution for the given input voltage range. The span and zero are adjusted for allowing the 0.75 and 5.25V dc input range (corresponds to -5% to 105% of variable) to convert from 0 to 255 counts of digital data. The A/D interfaces to the processors by internally contained three state buffers which are controlled by the processor 12.

Accurate conversions are possible by proper printed circuit layout and component selection. Reduction of digital noise generated by the microprocessor is reduced by separating the analog and digital ground returns, placement of components, and physically segregating all analog components from digital components. The component tolerances and temperature coefficients are selected such that an accuracy of more than 0.3% is maintained across the temperature range of $4^{\circ}$ C to $60^{\circ}$ C ($40^{\circ}$ to $140^{\circ}$ F).

The PWM waveform 20 which is outputed by the programmable timers is conditioned at 46 before being applied to the phase driver inputs 48. The activation of the positive and negative phase outputs are non-overlapping to ensure safe operation of the 3 phase inverter. A 24 microsecond dead time is created by a shift register and various logic elements. A processor controlled latch 34 generates waveform inversion signals which are combined with the timer outputs 20 to reduce the memory table associated with the waveforms by 50%. This same latch 34 has the capability to interrupt the waveform outputs instantly under program control. The conditioned waveform outputs are buffered by a Darlington transistor package before leaving the PCM at 48.

Two hardware interrupts are generated for processor recognition. The most active interrupt is generated by the master timer . . The master timer (also in 16) generates maskable interrupts proportional to the desired output frequency. The interrupt is electrically generated by the 6840 PTM 16. The second interrupt (overcurrent condition) is generated by circuitry external to the PCM. This interrupt is also processed by the maskable interrupt of the processor. The two interrupts are distinguished by polling the 6840 timer 16.

The functions of the microprocessor 12, according to the processor software, are as follows. The microprocessor must read inputs, decide what mode is being input, and process that mode. Then the processor must determine the proper frequency, and output this frequency via the programmable timer 18. Figures 2 and 3 show a state diagram overview of these functions. Fig. 4 shows the analog and digital interface to the processor. The processor software is written entirely in machine code to maximize processor time available for response to control system parameters.

After receiving a RESET input at 11, the microprocessor 12, as shown in Fig. 2, goes into a normal software reset - RAM test (52), ROM checksum test (54), setting of the stack pointer (56), initializing both programmable times (58,60), setting up Machine Fault Timer, setting up pulse storage timer, and setting up the first IRQ timer value.

If either the RAM or ROM test fail (line 66), the processor turns all LEDs (62) on and stops (64).

The main task of the processor 12 handles analog conversions, checks limit conditions, checks feedback, ramps frequency, and checks the mode of operation.

In a section (68) the processor 12 converts the analog signals. The analog signals are converted to hexadecimal and stored in RAM for use later. Each analog signal thus converted is determined by the input of the multiplexer 40.

Next, limit checking occurs (70). If either limit is set (up or down), the DESFRQ (Desired Frequency) is set to zero. Then as long as a limit is set, the DESFRQ equals zero only in the direction of the limit. This causes the motor to be able to run in the opposite direction of the limit condition. The limit inputs can be externally configured to provide system control of the motor.

Next, feedback checking occurs (72). The function of this section is to determine the maximum allowable frequency (DESFRQ) output for the given application.

The ramping of frequency (74) only occurs after so many passes of the wave pulse output. When the actual frequency (ACTFRQ) is to be ramped, the processor decides if the actual direction (ACTDIR) is equal to the desired direction (DESDIR). If the directions are not equal, the ACTFRQ must be ramped down to Ø Hz (motor stopped) before the directions can be set equal, the processor decides whether to ramp the frequency or not, and if so, in which direction. The following tests are made and the results are as follows:

| | |
|---|---|
| ACTFRQ = DESFRQ | ACTFRQ = ACTFRQ |
| ACTFRQ > DESFRQ | ACTFRQ = ACTFRQ - 3 |
| ACTFRQ < DESFRQ | ACTFRQ = ACTFRQ + 3 |

Then a pointer is set up at the beginning of the proper table of ACTFRQ.

The next task is mode selection (76). This portion of the real time software can be configured to allow control of a particular application. This section of the software will contain all applicable control algorithms for a given application. The ACTFRQ and DESFRQ values are determined in this portion of the software.

The IRQ interrupt is used for an over-current condition and wave-pulse output, as shown in Fig. 3. Over-current condition is noted by hardware, which gives the processor an IRQ interrupt. The response of the processor to an over-current interrupt is dependent on the application. If the over-current condition is determined undesirable, the motor is turned off and a manual RESET must occur to INITIALIZE the controller again.

The desired outputs are three sine-waves 90, 92, 94 in Fig. 5, which are used to drive the three phases of a three-phase induction motor. The three sine-waves either lead or lag each other by $120^{o}$ per phase. A reverse in the phasing of the sine-waves results in a reverse in the direction of the motor.

The establishment of the square pulse patterns 96, 98, 100, leading to the superimposed sine wave,is known as pulse width modulation. Twenty-four, thirty-six, seventy-two or one-hundred and fourty-four equal pulses (frequency determining the number) with varying "on-times" are used to generate the sine wave of the desired frequency. The number of pulses per cycle can be altered for any given frequency under software control. Thirty-six pulses are used in Fig. 5. The "on-time" for each pulse is calculated from the following formula:

$$T = \left[\frac{1}{2fI} + \frac{V\sin\theta}{650fI}\right] \cdot 1{,}000{,}000$$

where T = time in microseconds

f = fundamental frequency (3 to 60 Hz in 3 Hz increments)

$\theta$ = phase angle in degrees ($2.5^\circ$, $5.0^\circ$, $10^\circ$, or $15^\circ$ increments from $0^\circ$ to $90^\circ$ depending on fundamental frequency)

I = increments per cycle

f = 3,6 Hz I = 144

f = 9, 12, 15, Hz I = 72

f = 18 thru 45 Hz I = 36

f = 48 thru 60 Hz I = 24

V = desired peak voltage in volts (adjusted for maximum motor torque).

Fig. 5 shows the pulse pattern sine wave relation-ip. The negative half of the sine-wave is derived from the nplement of this signal.

The method for each of the three phase wave-rms is the same. The ROM 14 contains 20 different tables. ch table corresponds to a different output waveform frequency anging from 3 to 60 Hz in 3 Hz increments). The entries each table are the programmable timer values necessary create 90 degrees of a 360 degree PWM sine wave. The entire ne wave is created by repeating the entries in the table in e proper sequence and proper control of the waveform inversion ntrol lines outputed by latch 34. Only one table is necessary generate all three phase outputs. The individual phases quire the same timer values for a given frequency. It is st necessary to displace the three waveforms by $120^\circ$ with spect to each other.

The programmable timer values located in each frequen- table do not necessarily have to be sine weighted. The mer values can be changed to provide non-sinusoidal waveforms achieve greater average voltage output resulting in a ifferent motor torque relationship.

BAD ORIGINAL

The method used in creating this sine-wave is the same whether 24, 36, 72, or 144 pulses per cycle are outputed.

Initialization of each waveform is approximat the same. The counters and pointers are set up, inversion latch set, and IRQ time is determined. Table I shows the initialization of counters and pointers for each number of pulses. PNTA, PNTB and PNTC are the pointers for the three phases A, B and C; FRQPT is frequency point; and CNTA, CNTR, CNTC are the counts for the three phases.

The output for each phase is similar regardle of the number of pulses. A 36 pulse output will be shown in more detail.

The pointers move up and down the table depe on the value of the counter that it is associated with. See Tables II and III for an example of this. A gate is also set reset, depending on the count of the counter for each phase. When the counter reaches its limit, it is set to zero and the process starts over again.

Frequency change can only occur when CNTA = (
IRQ time is determined by:

$$\text{IRQ Time (microseconds)} = \left( \frac{1}{\# \times \text{freq.}} \times 10^{6} \right) - 290$$

where # = number of pulses per frequency
The IRQ time is loaded into a programmable timer module and this determines the rate of IRQ interrupts.

## TABLE I

24 Pulses

| | | | | | | | |
|---|---|---|---|---|---|---|---|
| PNTA | = | FRQPT | > | | CNTA | = | Ø |
| PNTB | = | FRQPT | > | + 8 | CNTB | = | 8 |
| PNTC | = | FRQPT | > | + 8 | CNTC | = | 16 |

36 Pulses

| | | | | | | | |
|---|---|---|---|---|---|---|---|
| PNTA | = | FRQPT | > | | CNTA | = | Ø |
| PNTB | = | FRQPT | > | + 12 | CNTB | = | 12 |
| PNTC | = | FRQPT | > | + 12 | CNTC | = | 24 |

72 Pulses

| | | | | | | | |
|---|---|---|---|---|---|---|---|
| PNTA | = | FRQPT | > | | CNTA | = | 0 |
| PNTB | = | FRQPT | > | + 24 | CNTB | = | 24 |
| PNTC | = | FRQPT | > | + 24 | CNTB | = | 48 |

144 Pulses

| | | | | | | | |
|---|---|---|---|---|---|---|---|
| PNTA | = | FRQPT | > | | CNTA | = | Ø |
| PNTB | = | FRQPT | > | + 48 | CNTB | = | 48 |
| PNTC | = | FRQPT | > | + 48 | CNTC | = | 96 |

## TABLE II

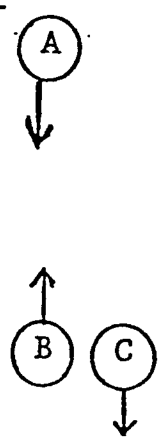


| Table | Count | | | |
|---|---|---|---|---|
| XX | Ø [A] | 18 | | 36 = Ø |
| XX | 1 | 17 | 19 | 35 |
| XX | 2 | 16 | 20 | 34 |
| XX | 3 | 15 | 21 | 33 |
| XX | 4 | 14 | 22 | 32 |
| XX | 5 | 13 | 23 | 31 |
| XX | 6 | 12 [B] | 24 [C] | 30 |
| XX | 7 | 11 | 25 | 29 |
| XX | 8 | 1Ø | 26 | 28 |
| XX | 9 | | 27 | |

at start:

| | | | | | |
|---|---|---|---|---|---|
| CNT [A] | = | 8 | PNT (A) | = | 6 |
| CNT [B] | = | 12 | PNT (B) | = | 6 |
| CNT [C] | = | 24 | PNT (C) | = | 6. |

Pointers (PNT)(B) and(C) start at the same location but more in opposite directions because of CNT values.

TABLE II

| Counter | Pointer Movement | Gate |
|---|---|---|
| Ø - 9 | inc ↓ | Ø pos |
| 10 - 18 | dec ↑ | Ø pos |
| 19 - 27 | inc ↓ | 1 neg |
| 28 - 36 | dec ↑ | 1 neg |

The time required to process an IRQ interrupt directly affects the overall system response of the PCM 10. The IRQ routine is given top priority to allow the real time PWM waveform outputs 48 to continue without interruption The IRQ execution time is reduced by the use of efficient machine instructions at the expense of increased memory locations necessary to store the IRQ routine.

An increase of PWM output frequency resolution for more precise control applications can be ovtained by increasing the number of frequency tables located in the ROM. The system response will not be significantly decreased by the addition of more output frequencies.

## CLAIM

A device for generating three-phase pulse width modulated waveforms for constant torque variable speed control of an induction motor, the device (10) being characterised by:

a microprocessor (12) which is programmed for initialization, a main task, interrupt processing, and waveform generation, the main task comprising storing a converted analog signal, checking (70) limits of motor position and, when such limits are reached, setting a desired frequency of the motor to zero, checking (72) a feedback signal which is indicative of the motor position, ramping frequency to meet the desired motor frequency, and selection of mode of control according to at least one algorithm;

a memory connected to the microprocessor (12) for containing the programming thereof and for containing a plurality of tables each corresponding to a desired motor waveform;

an analog to digital converter (44) connected to the microprocessor (12) for receiving a gain control signal, a deadband control signal, a set point control signal and a feedback control signal, the converter (44) being operable to convert at least one of said control signals at a time into said converted analog signal;

three waveform timers (18) connected to the microprocessor (12) for receiving information from one of said tables in the memory to generate three-phase pulse modulated waveforms for the motor; and

at least one additional timer (16) connected to the microprocessor (12) for generating, upon the occurrence of an undesirable condition for the motor, an interrupt signal to be applied to the microprocessor.

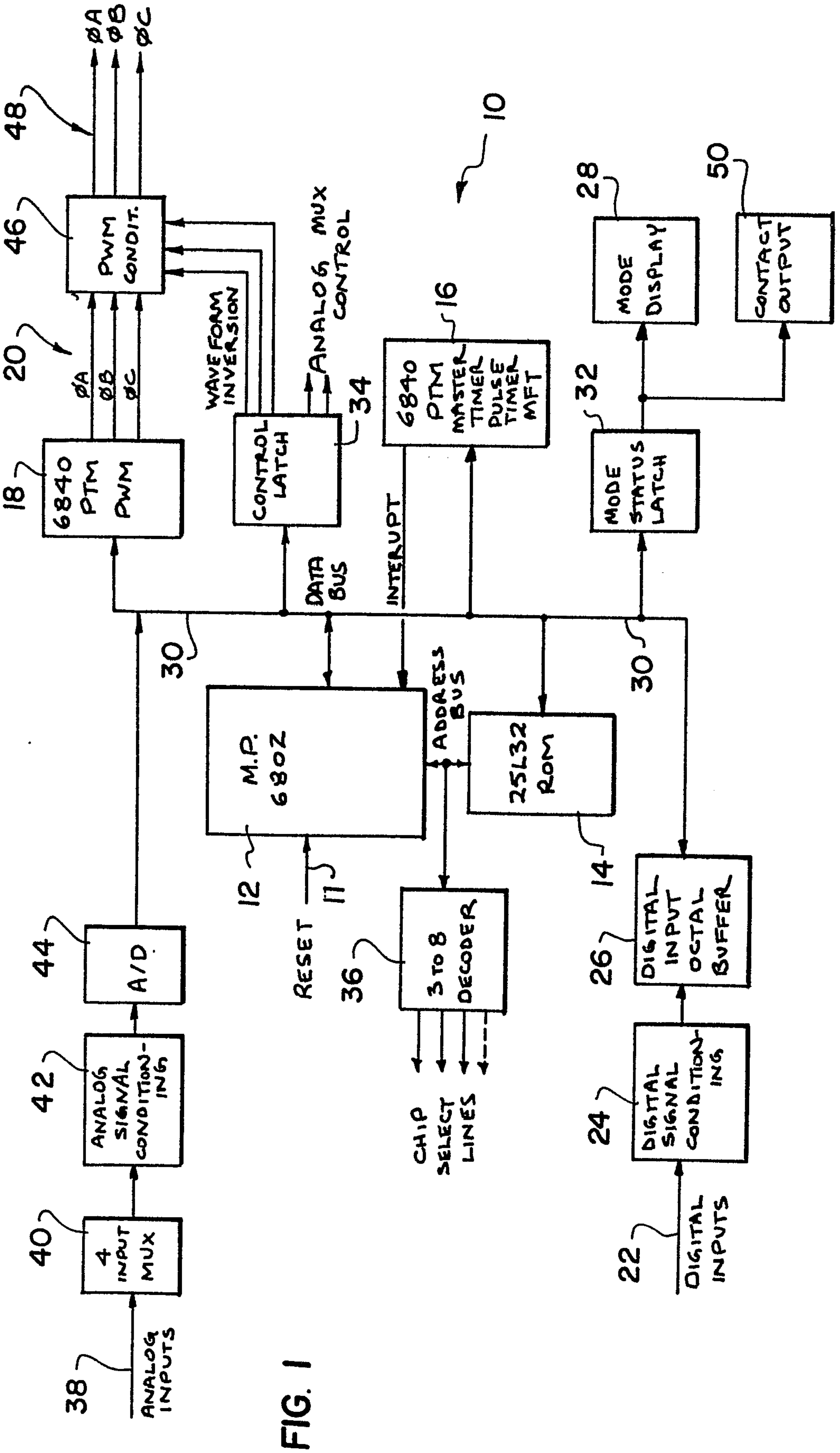
ØA ØB ØC
48
46
PWM CONDIT.
20
ØA ØB ØC
18
6840 PTM PWM
WAVEFORM INVERSION
CONTROL LATCH
34
ANALOG MUX CONTROL
16
6840 PTM MASTER TIMER PULSE TIMER MFT
10
28
MODE DISPLAY
50
CONTACT OUTPUT
32
MODE STATUS LATCH
DATA BUS
INTERUPT
30
ADDRESS BUS
M.P. 6802
25L32 ROM
12
11
RESET
14
44
A/D
36
3 to 8 DECODER
CHIP SELECT LINES
42
ANALOG SIGNAL CONDITION-ING
26
DIGITAL INPUT OCTAL BUFFER
24
DIGITAL SIGNAL CONDITION-ING
40
4 INPUT MUX
22
DIGITAL INPUTS
38
ANALOG INPUTS

FIG. 1

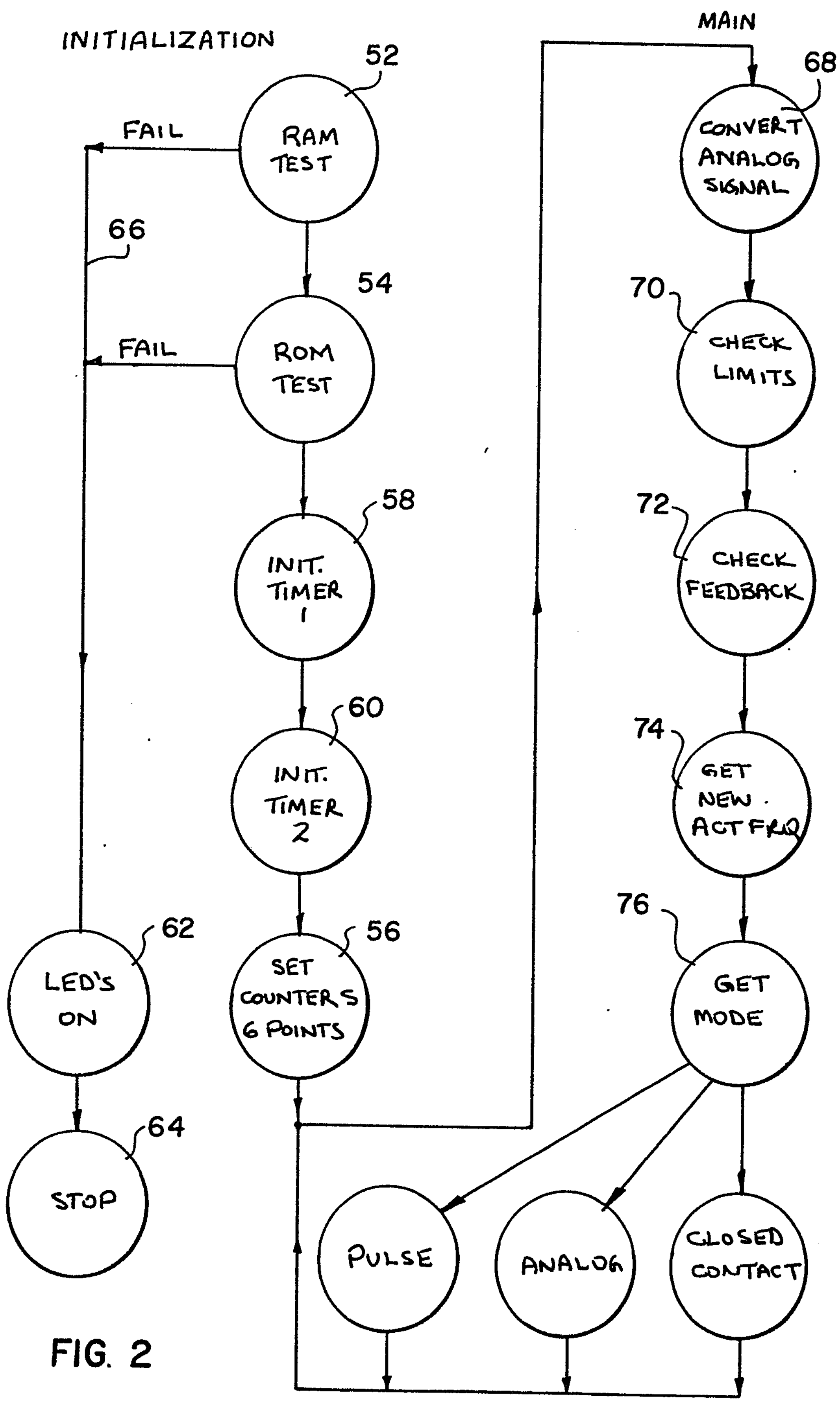
INITIALIZATION
MAIN
52
RAM TEST
FAIL
66
54
ROM TEST
FAIL
58
INIT. TIMER 1
60
INIT. TIMER 2
56
SET COUNTERS 6 POINTS
62
LED'S ON
64
STOP
68
CONVERT ANALOG SIGNAL
70
CHECK LIMITS
72
CHECK FEEDBACK
74
GET NEW ACT FRQ
76
GET MODE
PULSE
ANALOG
CLOSED CONTACT

FIG. 2

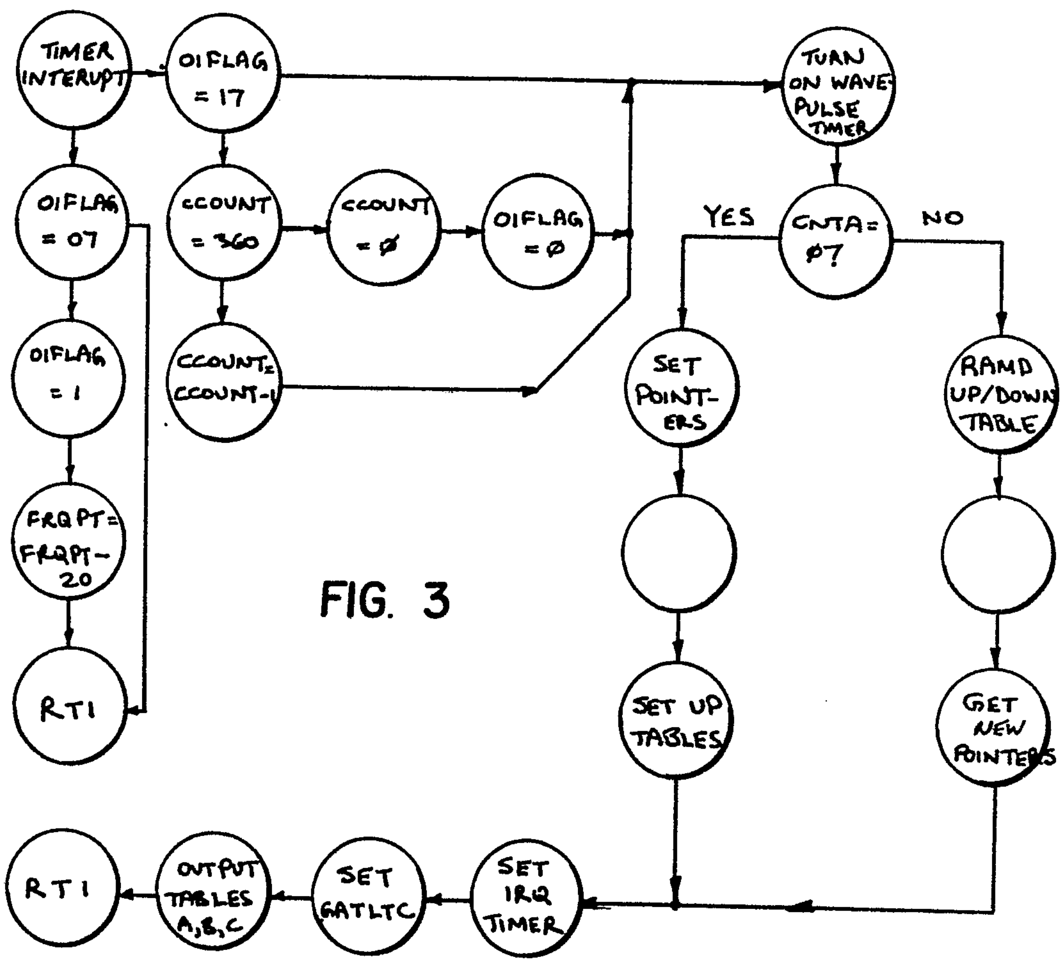
TIMER INTERUPT
OIFLAG = 17
TURN ON WAVE PULSE TIMER
OIFLAG = 07
CCOUNT = 360
CCOUNT = Ø
OIFLAG = Ø
YES
CNTA = Ø7
NO
OIFLAG = 1
CCOUNT = CCOUNT-1
SET POINT-ERS
RAMP UP/DOWN TABLE
FRQPT = FRQPT-20
RTI
SET UP TABLES
GET NEW POINTERS
RTI
OUTPUT TABLES A,B,C
SET GATLTC
SET IRQ TIMER

FIG. 3

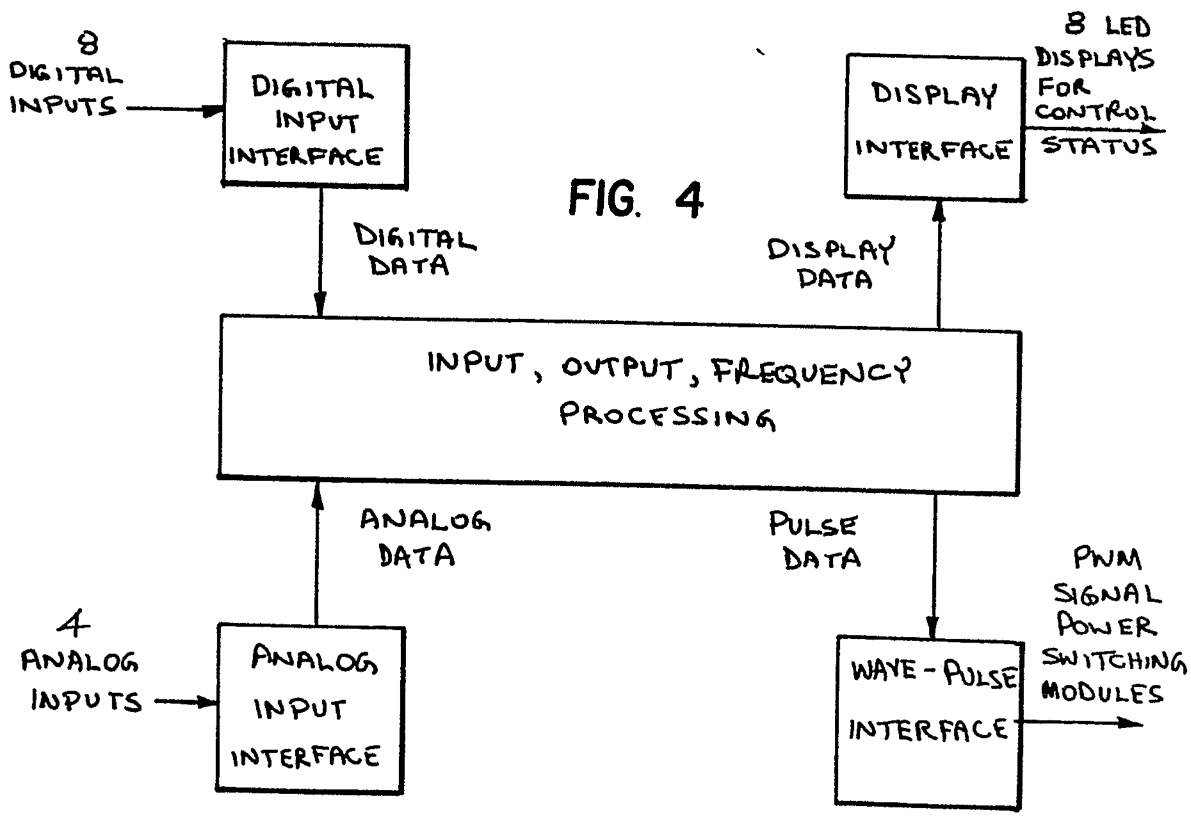
8 DIGITAL INPUTS
DIGITAL INPUT INTERFACE
DISPLAY INTERFACE
8 LED DISPLAYS FOR CONTROL STATUS
DIGITAL DATA
DISPLAY DATA
INPUT, OUTPUT, FREQUENCY PROCESSING
ANALOG DATA
PULSE DATA
4 ANALOG INPUTS
ANALOG INPUT INTERFACE
WAVE-PULSE INTERFACE
PWM SIGNAL POWER SWITCHING MODULES

FIG. 4

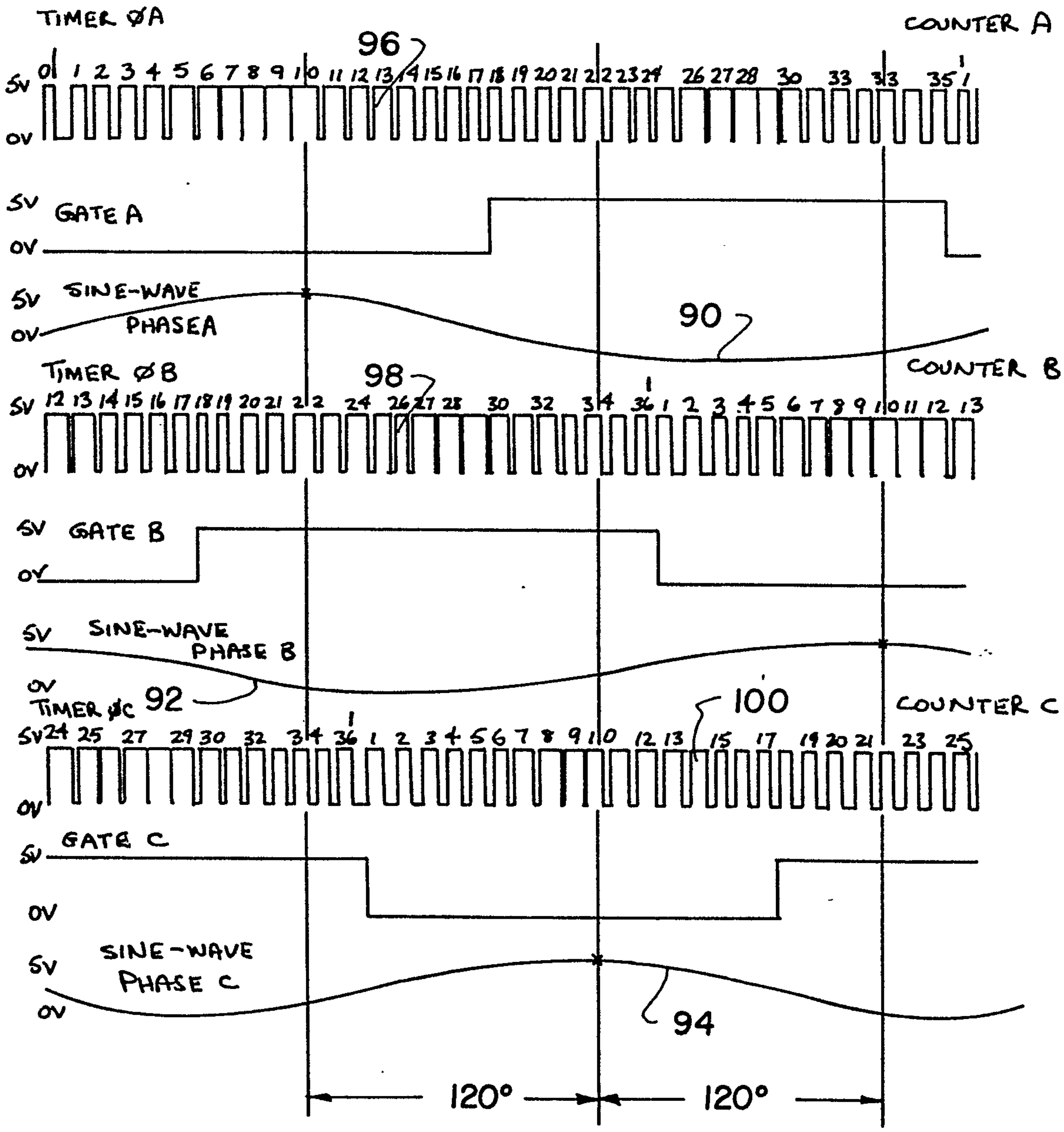
TIMER ØA
COUNTER A
96
5V
0V
GATE A
SINE-WAVE
PHASEA
90
TIMER ØB
COUNTER B
98
GATE B
SINE-WAVE
PHASE B
92
TIMER ØC
100
COUNTER C
GATE C
SINE-WAVE
PHASE C
94
120°
120°

FIG. 5

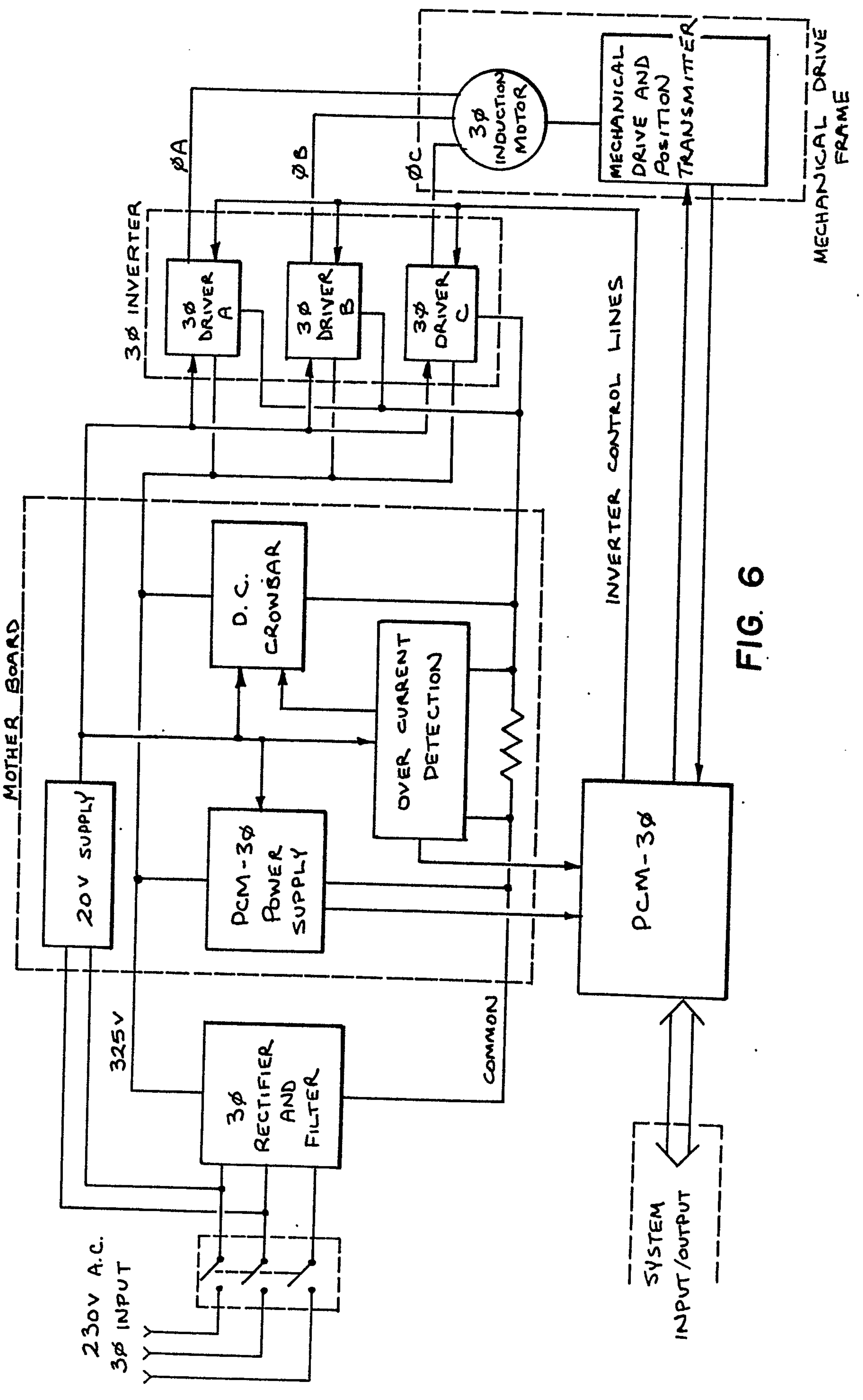
230V A.C.
3ø INPUT
3ø RECTIFIER AND FILTER
325V
COMMON
MOTHER BOARD
20V SUPPLY
PCM-3ø POWER SUPPLY
D.C. CROWBAR
OVER CURRENT DETECTION
3ø INVERTER
3ø DRIVER A
3ø DRIVER B
3ø DRIVER C
øA
øB
øC
3ø INDUCTION MOTOR
MECHANICAL DRIVE AND POSITION TRANSMITTER
MECHANICAL DRIVE FRAME
INVERTER CONTROL LINES
PCM-3ø
SYSTEM INPUT/OUTPUT

FIG. 6

0094767

European Patent Office

# EUROPEAN SEARCH REPORT

Application number

EP 83 30 2537

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| | | | H 02 P 13/18<br>H 02 P 7/62 |
| Y | IEEE TRANSACTIONS ON INDUSTRIAL ELECTRONICS AND CONTROL INSTRUMENTATION, vol. IECI-28, no. 3, August 1981, New York G. OLIVIER et al. "Microprocessor controller for a thyristor converter with an improved power factor", pages 188-194<br>* Page 191, chapter B and continuation on page 192 *<br>--- | 1 | |
| Y | Patent Abstracts of Japan vol. 5, no. 59, 22 April 1981 & JP-A-56-10091<br>--- | 1 | |
| Y | GB-A-2 079 979 (KOLLMORGEN TECHNOLOGIES) * Page 10, line 43 - page 11, line 59 *<br>--- | 1 | TECHNICAL FIELDS SEARCHED (Int. Cl. 3) |
| P,A | EP-A-0 063 176 (SIEMENS)<br>* Page 2, line 33 - page 4, line 36 *<br>--- | | H 02 M 7/00<br>H 02 P 7/00<br>H 02 P 13/18 |
| A | GB-A-2 025 175 (SIEMENS)<br>* Page 3, lines 78-90; page 4, lines 12-77 *<br>--- | | |
| A | US-A-4 105 939 (C.H. CULBERTSON) * Column 1, lines 20-40 *<br>--- -/- | | |

The present search report has been drawn up for all claims

| Place of search | Date of completion of the search | Examiner |
|---|---|---|
| BERLIN | 09-08-1983 | GESSNER E A F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0094767

European Patent Office

**EUROPEAN SEARCH REPORT**

Application number

EP 83 30 2537

Page 2

**DOCUMENTS CONSIDERED TO BE RELEVANT**

| Category | Citation of document with indication, where appropriate, of relevant passages | Relevant to claim | CLASSIFICATION OF THE APPLICATION (Int. Cl. 3) |
|---|---|---|---|
| D,A | US-A-4 099 109 (A. ABBONDANTI)<br>* Column 3, line 58 - column 6, line 62 *<br>----- | | |
| | | | TECHNICAL FIELDS SEARCHED (Int. Cl. 3) |

The present search report has been drawn up for all claims

| Place of search | Date of completion of the search | Examiner |
|---|---|---|
| BERLIN | 09-08-1983 | GESSNER E A F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82